# FASCICULE DE BREVET EUROPEEN

(11) **EP 2 722 727 B1**
(45) Date de publication et mention de la délivrance du brevet: **03.10.2018**
(21) Numéro de dépôt: 13181119.2
(22) Date de dépôt: 21.08.2013
(51) Int. Cl.: G05F 3/18, H02M 3/07, G05F 1/10, G05F 3/26

(54) **Alimentation d'une charge à potentiel flottant**
Zuführung einer Ladung mit Wechselpotenzial
Supply of a floating potential charge

(30) Priorité: 23.08.2012 FR 1257951
(43) Date de publication de la demande: 23.04.2014
(73) Titulaire: ST Microelectronics (Rousset) SAS, 13790 Rousset (FR)
(72) Inventeur: Bienvenu, Philippe, 83470 SAINT MAXIMIN LA SAINTE BAUME (FR)
(74) Mandataire: Cabinet Beaumont

(56) Documents cités:
- EP-A1- 0 800 131
- WO-A2-2006/023145
- US-A- 5 689 208
- US-A1- 2011 057 633

## Description

### Domaine de l'invention

La présente invention concerne les circuits électroniques et, plus particulièrement, les circuits d'alimentation d'une charge à partir d'une tension continue susceptible de varier.

### Exposé de l'art antérieur

Lorsque qu'une charge doit être alimentée sous une tension continue fixe, on utilise souvent un élément de fixation de la tension, typiquement une diode Zener connectée en parallèle à la charge. Une source de courant est alors connectée en série avec cette association en parallèle et l'ensemble est alimenté par une tension continue. Le rôle de la diode Zener est de limiter (fixer) la tension aux bornes de la charge. Le rôle de la source de courant est d'absorber le courant circulant dans la charge et dans la diode Zener.

Pour une charge fixe (consommation constante), la source de courant est dimensionnée en fonction de ce courant pour garantir que la diode Zener soit en permanence en avalanche (active en limiteur de tension).

Toutefois, pour une charge dont la consommation est susceptible de varier, la source de courant doit alors être dimensionnée en fonction de la consommation maximale de la charge. Cela engendre une consommation inutile lorsque la charge n'appelle pas ce courant maximal.

Le document US 2011/0057633 décrit un circuit d'asservissement de l'alimentation d'un circuit de pompe de charge comportant, en série avec la pompe de charge, une source de courant asservie sur la tension de sortie du circuit de pompe de charge. Une telle solution ne réduit la consommation que lorsque la tension maximale est atteinte. De plus, cela engendre une consommation de courant en sortie de la pompe de charge. En outre, les tensions de sortie de la pompe de charge sont généralement importantes.

Les documents WO 2006/023145 et EP 0800131 décrivent également des circuits de pompe de charge.

### Résumé

Un mode de réalisation de la présente invention vise à pallier tout ou partie des inconvénients des circuits usuels d'alimentation d'une charge.

Un autre objet d'un mode de réalisation de la présente invention est d'optimiser la consommation du circuit d'alimentation et, plus particulièrement d'en réduire les pertes.

Un autre objet d'un mode de réalisation de la présente invention est de proposer une solution ne nécessitant aucune modification de la charge à alimenter.

Pour atteindre tout ou partie de ces objets ainsi que d'autres, on prévoit un circuit comportant :
une source de courant destinée à être connectée en série avec une charge entre deux bornes d'application d'une première tension continue ;
un élément limitant la tension aux bornes de la charge ; et
un circuit d'asservissement de la valeur du courant dans la source de courant, sur le courant circulant dans ledit élément.

Selon un mode de réalisation de la présente invention, le circuit d'asservissement comporte un premier transistor MOS, monté en diode et en miroir de courant sur un deuxième transistor MOS, le deuxième transistor étant en série avec un troisième transistor entre lesdites bornes d'application de la tension d'alimentation et le troisième transistor étant monté en diode et miroir de courant sur un quatrième transistor relié à une borne de commande de la source de courant.

Selon un mode de réalisation de la présente invention, ledit élément est une diode Zener connectée au point milieu entre la charge et la source de courant.

Selon un mode de réalisation de la présente invention, la diode Zener est en série avec le premier transistor.

Selon un mode de réalisation de la présente invention, ledit élément est interne à la charge et commande ledit premier transistor.

Selon un mode de réalisation de la présente invention, le quatrième transistor est en série avec un élément résistif entre deux bornes d'application d'une deuxième tension continue.

Selon un mode de réalisation de la présente invention, la source de courant est formée d'un transistor MOS.

Selon un mode de réalisation de la présente invention, la charge est un circuit de pompe de charge.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 représente, de façon schématique, un exemple usuel de circuit d'alimentation d'une charge ;
la figure 2 est un schéma bloc fonctionnel d'un mode de réalisation d'un circuit d'alimentation d'une charge ;
la figure 3 représente le schéma électrique d'un mode de réalisation d'un circuit d'alimentation d'une charge flottante ; et
la figure 4 représente un exemple de charge flottante.

### Description détaillée

De mêmes éléments ont été désignés par de mêmes références aux différentes figures. Par souci de clarté, seuls les éléments utiles à la compréhension des modes de réalisation décrits ont été représentés et seront détaillés. En particulier, ces modes de réalisation sont compatibles avec tout type de charge destinée à être en série avec une source de courant.

Un exemple d'application des modes de réalisation qui vont être décrits vise une charge constituée d'un circuit de pompe de charge ou de transfert de charges. Dans un tel circuit, la consommation varie en fonction de celle du ou des éléments alimentés par la pompe de charge.

Des problèmes similaires se posent plus généralement dès qu'une charge doit être alimentée à partir d'une tension susceptible de varier et que l'on souhaite fixer sa tension d'alimentation à l'aide d'une diode Zener ou analogue. En fait, la charge se trouve alors en série avec une source de courant, ce qui crée un noeud à un potentiel flottant. Par exemple, il peut s'agir de circuits amplificateurs ou comparateurs référencés à un potentiel autre que la masse.

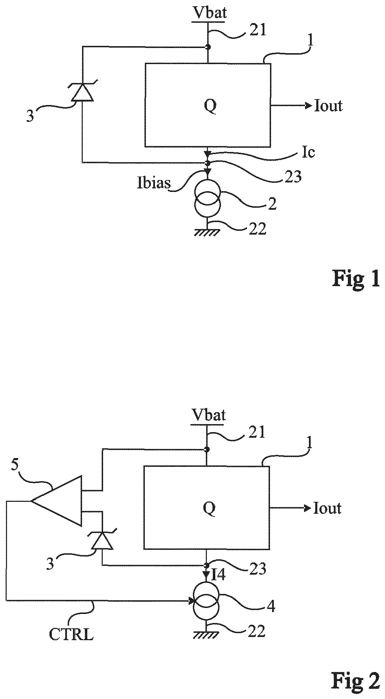

La figure 1 représente un exemple usuel de circuit d'alimentation d'une charge 1 (Q) par une tension continue (par exemple une tension Vbat fournie par une batterie) et dont la consommation varie. Le circuit 1 à alimenter est connecté en série avec une source de courant constant entre deux bornes 21 et 22 de connexion à la source (batterie) de fourniture de la tension continue. Une diode Zener 3 ou analogue est connectée en parallèle avec la charge 1, son anode étant côté point milieu 23 entre la charge et la source de courant 2. Le principe de fonctionnement est le suivant. La source de courant est habituellement dimensionnée pour prélever un courant constant Ibias de façon à garantir un fonctionnement de la charge selon ses différentes consommations. Dans l'exemple de la figure 1, cette consommation dépend du courant Iout que la charge 1 doit fournir. Le courant Ibias est choisi pour être supérieur à la valeur maximale du courant Ic susceptible d'être appelé par la charge 1, de façon à garantir une polarisation correcte de la diode Zener 3. Dans le cas contraire, la diode Zener 3 se bloque et la tension d'alimentation aux bornes de la charge 1, fixée par la tension seuil de la diode Zener, s'effondre.

Un tel circuit est plus particulièrement destiné à des applications dans lesquelles la tension continue Vbat risque de varier et où la charge doit être alimentée par une tension approximativement constante. Cela justifie le recours à une diode Zener 3 ou autre composant de fixation d'un seuil de tension.

Un problème avec un circuit du type de celui de la figure 1 est que la consommation globale est indépendante de la consommation de la charge 1. En effet, la source de courant constant 2 doit être dimensionnée par rapport au pire cas de consommation de la charge. Il en découle une consommation permanente maximale, même quand la charge n'en a pas besoin, le courant en surplus étant alors dévié par la diode Zener.

La figure 2 est un schéma fonctionnel d'un mode de réalisation d'un circuit d'alimentation d'une charge 1. Comme précédemment, la charge 1 est connectée en série avec une source de courant 4 entre deux bornes 21 et 22 d'application d'une tension continue Vbat. Toutefois, la source de courant 4 est ici une source de courant ajustable. La valeur du courant 14 dans la source de courant 4 dépend d'un signal de commande CTRL fourni par un circuit 5 comparant le potentiel au noeud 21 à celui du noeud 23 majoré de la tension seuil de la diode Zener 3. En d'autres termes, le comparateur 5 détecte une variation de la tension aux bornes de la charge 1 par rapport à la tension fixée par la diode 3.

L'objectif est d'ajuster la valeur du courant tiré par la source de courant 4 à la consommation de la charge.

On aurait pu penser exploiter une mesure du courant Iout fourni par la charge, ou une mesure directe du courant dans la charge 1 pour évaluer sa consommation et ajuster la valeur de la source de courant. Toutefois, cela nécessiterait de modifier le circuit de la charge lui-même. De plus, prélever une information sur le courant consommé par la charge au niveau de celle-ci est susceptible d'influer sur son fonctionnement.

Ainsi, comme l'illustre la figure 2, on prévoit d'asservir le courant dans la source de courant 4 au courant circulant dans la diode Zener 3. En effet, si la consommation de la charge diminue, le courant dans la branche de la diode Zener a tendance à augmenter et inversement.

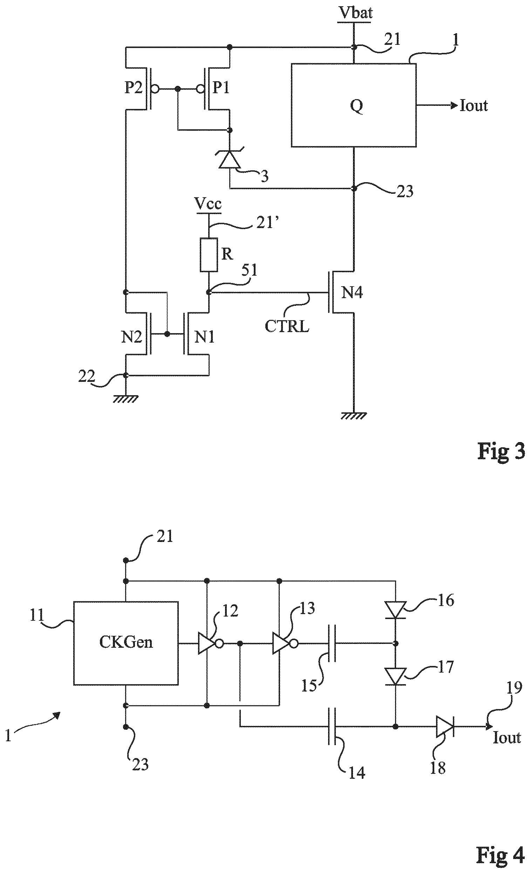

La figure 3 représente un schéma électrique d'un mode de réalisation d'un circuit d'alimentation tel que représenté en figure 2.

Un transistor MOS P1, ici à canal P, monté en diode, est intercalé entre la cathode de la diode Zener 3 et la borne 21. Ce transistor P1 est monté en miroir de courant sur un transistor MOS P2, à canal P, connecté en série avec un transistor MOS N2, à canal N, entre les bornes 21 et 22. Le transistor N2 est monté en diode, et en miroir sur un transistor MOS N1, à canal N. Le transistor N1 est en série avec un élément résistif R, de conversion courant-tension, entre une borne 21' d'application d'une tension continue (Vcc) et la masse 22. La tension Vcc appliquée à la borne 21' n'est pas nécessairement identique à la tension appliquée à la borne 21. Il s'agira en pratique généralement d'une tension inférieure. Le point milieu 51 entre la résistance R et le transistor N1 est relié à la grille d'un transistor MOS N4, à canal N, formant la source de courant 4.

En supposant que la consommation de la charge augmente, le courant dans le transistor P1, donc dans la diode Zener 3, a tendance à diminuer. Cette diminution du courant, reproduite dans le transistor P2, puis dans le transistor N1 (miroir de courant N1, N2), revient fonctionnellement à modifier la valeur du pont résistif formé de l'élément R et de la résistance à l'état passant du transistor N1. Il en découle une augmentation du potentiel au noeud 51, d'où une augmentation du courant tiré par le transistor N4.

A l'inverse, si la consommation de la charge diminue, l'augmentation du courant dans le transistor P1 se reporte sur le courant dans le transistor N1, ce qui provoque une diminution du potentiel CTRL de la grille du transistor N4, d'où une diminution du courant tiré par le transistor N4.

Dans le dimensionnement du circuit de la figure 3, on tiendra bien entendu compte du fait que la tension d'alimentation de la charge 1 est désormais fixée par la tension seuil de la diode Zener, majorée de la tension seuil du transistor P1 monté en diode.

Un avantage de la réalisation exposée est qu'elle optimise la consommation de la source de courant 4 permettant l'alimentation de la charge 1.

Un autre avantage est que la régulation ne nécessite pas de mesure directe de la consommation de la charge, ni du courant de sortie Iout de cette charge. La mise en oeuvre des modes de réalisation décrits ne nécessite donc aucune modification de la charge 1 à alimenter.

A titre d'exemple particulier de réalisation, la tension Vbat est une tension de quelques dizaines de volts. La charge 1 est un circuit de pompe de charge destiné à alimenter des circuits applicatifs. La tension Vcc est de l'ordre de quelques volts.

La figure 4 illustre un exemple de circuit de pompe de charge susceptible de constituer la charge 1 du circuit des figures 2 et 3. Un tel circuit est en lui-même usuel.

Un générateur d'horloge 11 (CK Gen) est alimenté entre les bornes 21 et 23 et fournit un signal entrée d'un premier inverseur 12 en série avec un second inverseur 13. Les inverseurs 12 et 13 sont alimentés entre les bornes 21 et 23. Les sorties des inverseurs 12 et 13 sont chacune reliées à une première électrode d'un élément capacitif 14, respectivement 15. Trois diodes 16, 17 et 18 sont connectées en série entre la borne 21 et une borne 19 fournissant le courant Iout. Enfin, les secondes électrodes respectives des condensateurs 14 et 15 sont reliées entre les diodes 16 et 17, respectivement entre les diodes 17 et 18. Le fonctionnement d'un tel circuit est connu.

Divers modes de réalisation ont été décrits. Diverses variantes et modifications apparaîtront à l'homme de l'art. En particulier, bien que les modes de réalisation aient été décrits en relation avec une charge 1 connectée côté tension positive, le circuit décrit se transpose sans difficulté à une charge en série avec une source de courant, la source de courant étant côté potentiel positif. Par ailleurs, bien que l'on ait décrit des modes de réalisation dans lesquels la limitation du courant dans la charge est assurée par un élément limiteur externe connecté aux bornes de celle-ci, on pourra aussi utiliser une référence de tension (par exemple, interne à la charge) pour commander la grille du transistor P1. Une telle variante est en particulier destinée au cas où la charge possède une telle référence de tension. Enfin, le dimensionnement des composants du circuit est à la portée de l'homme du métier à partir des indications fonctionnelles données ci-dessus, de la consommation maximale attendue de la charge et en utilisant des outils de dimensionnement de circuits électroniques en eux-mêmes usuels.

## Revendications

1. Circuit comportant :
une source de courant (4, N4) destinée à être connectée en série avec une charge (1) entre deux bornes (21, 22) d'application d'une première tension continue (Vbat) ;
un élément (3) limitant la tension aux bornes de la charge ; et
un circuit d'asservissement de la valeur du courant dans la source de courant, sur le courant circulant dans ledit élément,
**caractérisé en ce que** :
le circuit d'asservissement comporte un premier transistor MOS, monté en diode (P1) et en miroir de courant sur un deuxième transistor MOS (P2), le deuxième transistor étant en série avec un troisième transistor (N2) entre lesdites bornes (21, 22) d'application de la tension d'alimentation et le troisième transistor étant monté en diode et miroir de courant sur un quatrième transistor (N1) relié à une borne de commande de la source de courant (N4), le quatrième transistor (N1) étant en série avec un élément résistif (R) entre deux bornes (21', 22) d'application d'une deuxième tension continue ; et **en ce que**
ledit élément (3) est une diode Zener, en série avec le premier transistor, connectée au point milieu (23) entre la charge (1) et la source de courant (4).

2. Circuit selon la revendication 1, dans lequel ledit élément est interne à la charge et commande ledit premier transistor (P1).

3. Circuit selon la revendication 1 ou 2, dans lequel la source de courant (4) est formée d'un transistor MOS (N4).

4. Circuit selon l'une quelconque des revendications 1 à 3, dans lequel la charge est un circuit de pompe de charge.

## Patentansprüche

1. Eine Schaltung, die folgendes aufweist:
eine Stromquelle (4, N4) vorgesehen zur Reihenschaltung mit einer Last (1) zwischen zwei Anschlüssen (21, 22) zum Anlegen einer ersten Gleichspannung (Vbat);
ein Element (3), das die Spannung über die Last begrenzt; und
eine Steuerschaltung zum Steuern des Werts des Stroms in der Stromquelle, wenn der Strom in dem Element fließt,
**dadurch gekennzeichnet, dass**:
die Steuerschaltung einen ersten MOS-Transistor (P1) aufweist, der als eine Diode und ein Stromspiegel an einem zweiten MOS-Transistor (P2) angebracht ist, der zweite Transistor in Reihe geschaltet ist mit einem dritten Transistor (N2), und zwar zwischen den Anschlüssen (21, 22) zum Anlegen der Versorgungsspannung, und der dritte Transistor als Diode und Stromspiegel an einem vierten Transistor (N1) angebracht ist, der mit einem Steueranschluss der Stromquelle (N4) verbunden ist, der vierte Transistor (N1) in Reihe mit einem Widerstandselement (R) zwischen zwei Anschlüssen (21', 22) zum Anlegen einer zweiten Gleichspannung geschaltet ist; und dadurch, dass
das Element (3) eine Zenerdiode ist, die in Reihe mit dem ersten Transistor mit dem Verbindungspunkt (23) der Last (1) und der Stromquelle (4) verbunden ist.

2. Die Schaltung nach Anspruch1, wobei das Element innerhalb der Last liegt und den ersten Transistor (P1) steuert.

3. Die Schaltung nach Anspruch 1 oder 2, wobei die Stromquelle (4) aus einem MOS-Transistor (N4) gebildet ist.

4. Die Schaltung nach einem der Ansprüche 1 bis 3, wobei die Last eine Ladungspumpschaltung ist.

## Claims

1. A circuit comprising:
a current source (4, N4) intended to be series-connected with a load (1) between two terminals (21, 22) of application of a first D.C. voltage (Vbat);
an element (3) limiting the voltage across the load; and
a circuit for controlling the value of the current in the current source with the current flowing in said element,
**characterized in that**:
the circuit for controlling comprises a first MOS transistor (P1) assembled as a diode and as a current mirror on a second MOS transistor (P2), the second transistor being in series with a third transistor (N2) between said terminals (21, 22) of application of the power supply voltage and the third transistor being assembled as a diode and as a current mirror on a fourth transistor (N1) connected to a control terminal of the current source (N4), the fourth transistor (N1) being in series with a resistive element (R) between two terminals (21', 22) of application of a second D.C. voltage; and **in that**
said element (3) is a zener diode, in series with the first transistor, connected to the junction point (23) of the load (1) and of the current source (4).

2. The circuit of claim 1, wherein said element is internal to the load and controls said first transistor (P1).

3. The circuit of claim 1 or 2, wherein the current source (4) is formed of a MOS transistor (N4).

4. The circuit of any of claims 1 to 3, wherein the load is a charge pump circuit.
